# EUROPÄISCHE PATENTSCHRIFT

(11) **EP 1 068 508 B1**
(45) Veröffentlichungstag und Bekanntmachung des Hinweises auf die Patenterteilung: **24.04.2002**
(21) Anmeldenummer: 99922083.3
(22) Anmeldetag: 31.03.1999
(51) Int. Cl.: G01N 19/02, G01L 5/16

(54) **VORRICHTUNG ZUR UNTERSUCHUNG VON REIBVERHÄLTNISSEN**
DEVICE FOR EXAMINING FRICTION CONDITIONS
DISPOSITIF D'ANALYSE DES CONDITIONS DE FROTTEMENT

(30) Priorität: 03.04.1998 DE 19814911
(43) Veröffentlichungstag der Anmeldung: 17.01.2001
(73) Patentinhaber: Tetra Gesellschaft für Sensorik, Robotik und Automation mbH, 98693 Ilmenau (DE)
(72) Erfinder: MOLLENHAUER, Olaf, D-98693 Ilmenau (DE); SCHERGE, Matthias, D-98693 Manebach (DE); KARGUTH, Andreas, D-99867 Gotha (DE)
(74) Vertreter: Liedtke, Klaus, Dr.
(86) Internationale Anmeldenummer: DE9900981
(87) Internationale Veröffentlichungsnummer: WO9951965

(56) Entgegenhaltungen:
- US-A- 5 400 661
- US-A- 5 661 235
- BURGER J F ET AL: "MINIATURISED FRICTION FORCE MEASURING SYSTEM FOR TRIBOLOGICAL RESEARCH ON MAGNETIC STORAGE DEVICES" PROCEEDINGS OF THE 9TH. ANNUAL INTERNATIONAL WORKSHOP ON MICRO ELEC MECHANICAL SYSTEMS, INVESTIGATION OF MICRO STRUCTURES, SENSORS, ACTUATORS, MACHINES AND SYSTEMS. SAN DIEGO, FEB. 11 - 15, 1996, Nr. WORKSHOP 9, 11. Februar 1996 (1996-02-11), Seiten 99-104, XP000689253 INSTITUTE OF ELECTRICAL AND ELECTRONICS ENGINEERSISBN: 0-7803-2986-4
- "MEASURING ADHESION AND FRICTION FORCES" NTIS TECH NOTES,1. Mai 1991 (1991-05-01), Seite 422 XP000234548 ISSN: 0889-8464
- MITTMANN H U ET AL: "Reibungsmessungen und Oberflächenuntersuchungen an Kunststoff-Metall Gleitpaarungen" MATERIALPRÜFUNG, Bd. 17, Nr. 10, Oktober 1975 (1975-10), Seiten 366-367, XP002112539 Düsseldorf, DE in der Anmeldung erwähnt

## Beschreibung

Die Erfindung betrifft eine Vorrichtung zur Untersuchung von Reibverhältnissen an Reibpartnern, mit der eine Normalkraft zwischen zwei untersuchende Reibungspartner eingeprägt und mit einem Normalkraftsensor ermittelt wird und bei der die bei einer Relativbewegung zwischen den Reibpartnern wirkende Tangentialkraft mit einem Reibkraftsensor ermittelt wird.

Die Vorrichtung dient zur Ermittlung von kleinen Reibungswerten mit hoher Genauigkeit.
Im Stand der Technik sind verschiedene Ausführungen für Vorrichtungen zur genauen Untersuchung von Reibverhältnissen bekannt.
In Mittmann, Czichos: Reibungsmessungen und Oberflächenuntersuchungen an Kunststoff-Metall-Gleitpartnern; Materialprüfung 17, 1975, Nr.10, Okt., S.366, 367 ist eine Vorrichtung beschrieben, die als Stift-Scheibe-Triborneter ausgeführt ist. Dabei werden die Untersuchungen in einer abgeschlossenen, temperierbaren und mit einer definierten Gasen spülbaren Versuchskammer durchgeführt. Die Scheibe treibt ein tachogesteuerter Gleichstrommotor über ein zwischengeschaltetes Getriebe mit konstanter Geschwindigkeit an. Ein zylindrischer Stift aus PTFE, HDPE oder PETP wird vor der Untersuchung mit einem Mikrotom geschnitten. Der Stift wird mit einem Beobachtungsfernrohr parallel zu Scheibenoberfläche ausgerichtet. Als Kraftaufnehmer wird eine Anordnung aus vier Biegebalken verwendet.

Dabei ist nachteilig, daß die Vorrichtung sehr aufwendig ist und nur in einem eingeschränkten Kräftebereich einsetzbar ist.

Aus Burger J F et al, Proc. 9th Annual workshop on micromechanical systems, San Diego 1996 (IEEE), S 99 - 104, ist eine Vorrichtung zur Untersuchung von Reibverhältnissen bekannt, bei der mit einem elastischen Biegeelement Tangential- und Normalkräfte übertragen werden.

Nach US 5 661 235 ist ein Kraftsensor für Instrumente der Oberflächenanalyse bekannt, bei dem biaxiale Federelemente zur Übertragung von Tangential- und Normalkräften verwendet werden.

Bei den bekannten Anordnungen ist nachteilig, daß diese entweder einen aufwendigen Aufbau erfordern oder nur eine geringe Meßgenauigkeit ermöglichen.

Der Erfindung liegt die Aufgabe zurunde, eine Vorrichtung der eingangs genannten Art anzugeben, die mit einfachen Mitteln eine Messung mit hoher Genauigkeit und guter Reproduzierbarkeit ermöglicht.

Erfindungsgemäß gelingt die Lösung der Aufgabe mit den kennzeichnenden Merkmalen von Patentanspruch 1.

Vorteilhafte Ausgestaltungen der erfindungsgemäßen Vorrichtung sind in den Unteransprüchen angegeben.

In einer bevorzugten Ausführungsform weist die Vorrichtung ein elastisches Biegeelement aus Glas auf, welches mehrere Federanordnungen mit unterschiedlichen Federsteifigkeit beinhaltet. Hierzu sind ein weiches und mit Anschlägen versehenes Parallelfederelement für die Einprägung der Tangentialbewegung sowie eine härteres Blattfederelement zur Normalkrafteinprägung, welches senkrecht zu den beiden Parallelfederelementen wirkt, in dem elastischem Element integriert.
Die Krafteinleitungsstellen und die Sensoren befinden sich jeweils an gegenüberliegenden Teilen des elastischen Biegeelementes.

Mit einem Frontalantrieb wird eine Bewegung in Richtung der Flächennormalen der sich berührenden Reibkörper erzeugt. Im Frontalantrieb ist zweckmäßigerweise eine Justiereinrichtung zur parallelen Ausrichtung der beiden Körperebenen integriert. Die durch die Bewegung des Frontalanbiebs erzeugte Auslenkung des relativ harten (waagerechten) Teiles des elastischen Biegeelementes bewirkt, daß die beiden Reibkörper mit einer einstellbaren und genau meßbaren geringen Normalkraft (von wenigen µN bis ca. 10 N) aufeinander liegen. Die Normalkraft wird mit einem Kraftsensor, vorzugsweise mittels optischen Wegsensor, in ein elektrisches Signal umgewandelt. Zur Bestimmung der Reibungsverhälnisse muß die tangential wirkende Reibkraft ermittelt werden. Hierzu wird eine Relativbewegung mit dem Tangentialantrieb eingeprägt. Die weiche elastische Tangentialführung und der damit verbundene Kraftangriff folgen in Abhängigkeit von den Reibungsverhältnissen der Antriebskraft nicht direkt, sondern es ergibt sich ein Wegunterschied zwischen dem mit dem Kraftangriff verbundenem Teil der elastischen Tangentialführung und dem mit dem Tangentialantrieb verbundenem Teil der Tangentialführung. Dieser Wegunterschied ist in Abhängigkeit von der eingeprägten Normalkraft und von den elastischen Eigenschaften der Tangentialführung ein Maß für die zu bestimmenden Reibungsverhältnisse. Der Wegunterschied wird mit Hilfe eines Sensors, vorzugsweise mit einem optischen Wegsensor, in ein elektrisches Signal umgewandelt und zusammen mit dem Signal des Normalkraftsensos einer Signalverarbeitungseinheit zugeführt.

Die Erfindung wird im Folgenden an einem Ausführungsbeispiel näher erläutert. In den zugehörigen Zeichnungen zeigen:
Figur 1 ein Blockschaltbild zur Erläuterung des grundlegenden Aufbaus der Meßanordnung,
Figur 2 ein Funktionsschema der Meßanordnung,
Figur 3 eine Draufsicht auf das elastische Element,
Figur 4 eine Gesamtansicht der Meßanordnung,
Figur 5 zwei Ausführungsformen das elastische Element, und
Figur 6 das Prinzip der faseroptischen Kraftmeßanordnung.

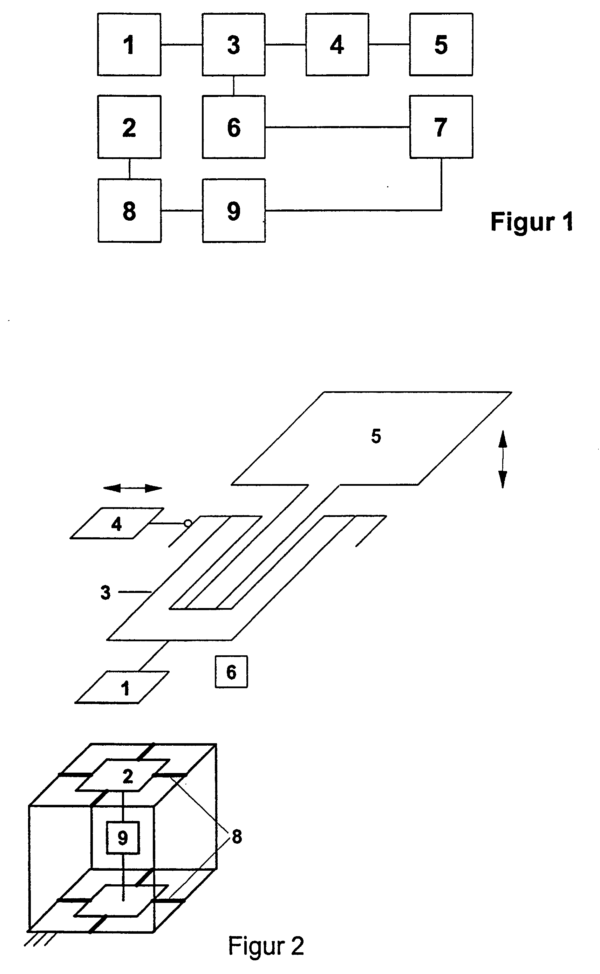

Das in Figur 1 dargestellte Blockschaltbild zeigt die einzelnen Funktionselemente der Meßanordnung und deren Zusammenwirken.

Figur 2 erläutert die Funktionsweise der Meßanordnung. Die Reibungspartner berühren sich mit der Kraftangriffsfläche 1 und der Kraftableitungsfläche 2. Zwischen den Reibungspartnern wird eine Normalkraft eingeprägt. Hierzu wird eine in horizontaler Richtung verlaufenden Frontalbewegung mittels des Frontalantriebes erzeugt. Im Frontalantrieb 5 ist eine Justiereinrichtung integriert, die ein paralleles Ausrichten der beiden Körperflächen 1 und 2 erlaubt. Die Normalkraft bewirkt eine elastische Auslenkung des Verformungskörpers 3, der gleichzeitig als Normalkraftführung wirkt. Die Normalkraft wird mittels eines Normalkraftsensors 9, der vorzugsweise als optischer Wegsensor ausgeführt ist, ermittelt. Der Sensor erzeugt ein auswertbares elektrisches Signal.
Die für die Bestimmung der Reibungseigenschaften zwischen den Reibpartnern 1 und 2 notwendige Relativbewegung wird mit dem Tangentialantrieb 4 eingeprägt. Dadurch werden das elastische Element 3 und die Kraftangriffsfläche 1 derart bewegt, daß in Abhängigkeit von den Reibungsverhältnissen das elastische Element 3 der Antriebsbewegung nicht direkt folgen kann.

Der Wegunterschied zwischen dem mit der Kraftangriffsfläche 1 verbundenen Teil des das elastischen Elementes 3 und dem mit dem Tangentialantrieb 4 verbundenen Teil des elastischen Elementes 3 ist in Abhängigkeit von dessen elastischen Eigenschaften und der eingeprägten Normalkraft ein Maß für die zu bestimmenden Reibungsverhältnisse. Der Wegunterschied wird mittels eines Tangentialkraftsensors 6, vorzugsweise wiederum ein optischer Wegsensor, in ein elektrisches Signal umgewandelt und zusammen mit dem Signal des Normalkraftsensors 9 einer Signalverarbeitungseinheit 7 zugeführt.

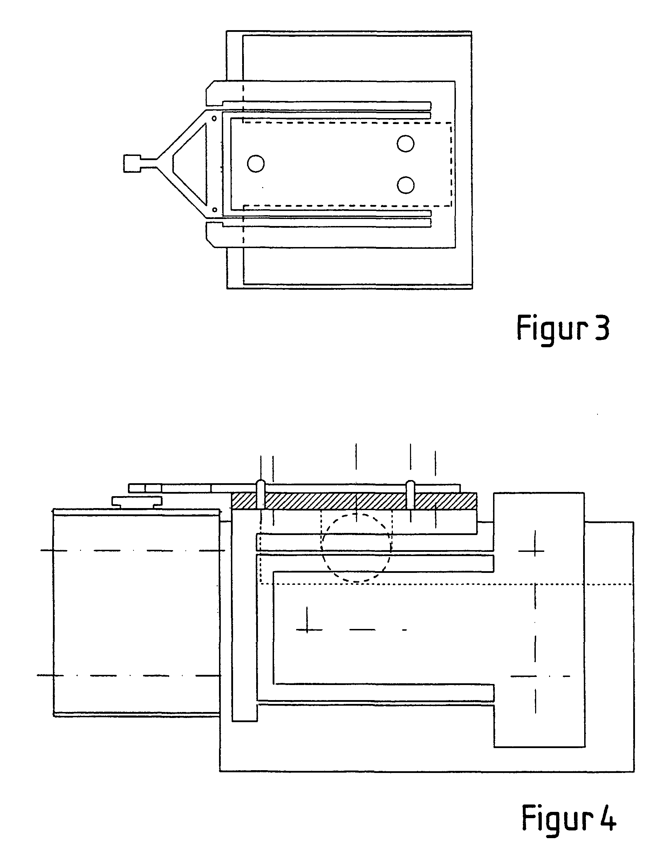

Figur 3 zeigt eine Ausführungsform für das elastische Element 3 und Figur 4 erläutert eine Variante der Meßanordnung in Seitenansicht.

Die für die erfindungsgemäße Anordnung verwendete Funktionsstruktur für das elastische Element realisiert einen Aufnehmer für die Messung sehr geringer Kräfte. Das elastische Element besteht aus einem Glasteil, welches eine Struktur aufweist, die sowohl den werkstofftechnischen Eigenschaften der strukturierbaren Gläser als auch der Herstellungstechnologie gerechnet wird.
Das erfindungsgemäße elastische Element aus strukturiertem Glas weist gegenüber mit anderen Herstellungsmethoden und anderen Werkstoffen hergestellten Verformungskörpern wesentliche Vorteile auf.

Dazu zählen neben der freien geometrischen Gestaltung von kleinsten Funktionselementen insbesondere die Möglichkeit der Anordnung der Funktionsebene in der Ebenen des Ausgangswerkstoffes.

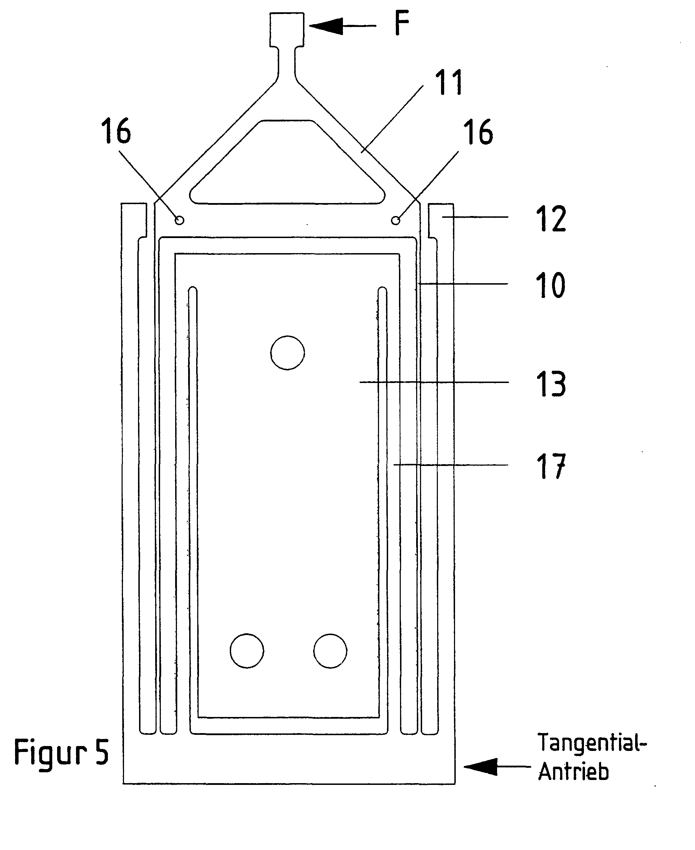

In Figur 5 ist eine Ausführungsmöglichkeit für einen Mikrokraftaufnehmer dargestellt. Bei dieser Anordnung sind zwei weiche Biegefedern 10 über das Koppelelement 11 zu einem Parallelfedersystem verbunden. Die Auslenkung dieser Parallelfederanordnung ist ein Maß für die Tangentialkraft F. Das Koppelelement 11 dient beim Einsatz als Kraftmeßsystem zur Einprägung der Kräfte F in der Glasebene. Der Verformungsweg wird durch die Seitenelemente 12 begrenzt. Die Verbindung zum Gestell wird über die Anschlußfläche 13 hergestellt. Die steifere Tangentialführung 17, die ebenfalls eine Parallelfederanordnung darstellt, dient zur Führung der Meßfedern 10 bei Wegeinprägung durch den Tangentialantrieb.

Mit dieser Anordnung gelingt es, eine hohe Reproduzierbarkeit der einzelnen geometrischen Größen des Mikrokraftaufnehmers zu erreichen.

Im Rahmen der Untersuchung von verschiedenen Strukturen konnte nachgewiesen werden, daß auch bei größeren Abmessungen eine Maß- und Formtoleranz von 10 µm eingehalten wird. Dies entspricht einem relativen Fehler von ca. 0,15-0,2 %.

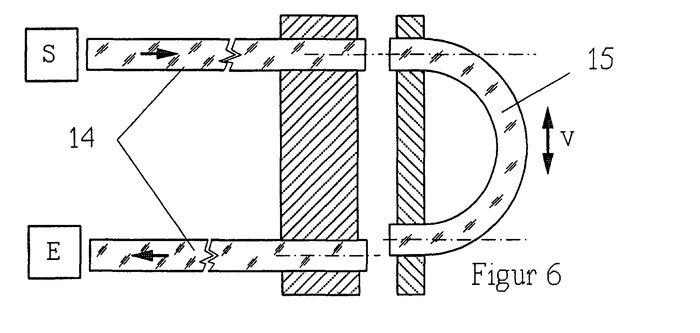

Figur 6 zeigt das Prinzip der faseroptischen Kraftmeßanordnung, die in das elastische Element integriert ist und zur Messung der Tangentialkraft dient. Die vom Sender S generierte Strahlung wird über einen Lichtwellenieiter 14 zu der Austrittsöffnung geleitet und dort abgestrahlt.

Der Verbindungskörper 15, welcher auf der Koppel 11 der Parallelfederanordnung sitzt, leitet die Strahlen weiter und wird an seinem anderen Ende ebenfalls zum Sender. Die Strahlen werden von dem mit dem Empfänger E verbundenen lichtleitenden Körper 14 aufgenommen und in ein elektrisches Signal umgesetzt. Der lichtleitende Körper 14 ist vorzugsweise ein Lichtwellenleiter. Die Ein- und Austrittsöffnungen wirken als Blenden.
Diese Anordnung ermöglicht die Ausnutzung des linearen Bereiches der Kennlinie mit hoher Empfindlichkeit sowie die gezielte Unterdrückung des Einflusses von Störgrößen. Die Befestigung des lichtleitenden Verbindungskörpers 15 erfolgt in den beiden Durchbrüchen 16 des Koppelelementes II. Die durch den Kraftangriff F hervorgerufene Auslenkung konnte mit einer Genauigkeit von ca. 100 nm detektiert werden. Die Grenze der Auflösung liegt bei ca. 10 nm.
Daraus ergibt sich eine Anordnung zur Messung von Mikrokräften mit einer Auflösung von ca. 0,1 µN. Die erfindungsgemäße Anordnung ermöglicht einen Meßbereich für die Mikrokraftmessung von 10 µN bis 100 µN.

### BEZUGSZEICHENLISTE

- 1: Kraftangriffsfläche
- 2: Kraftableitungsfläche
- 3: elastisches Biegeelement
- 4: Tangentialantrieb
- 5: Frontalantrieb
- 6: Tangentialkraftsensor
- 7: Signalverarbeitung
- 8: Normalkraftführung und Verformungskörper
- 9: Normalkraftsensor
- 10: Biegefeder
- 11: Koppelelement
- 12: Seitenelement
- 13: Anschlußfläche
- 14: Lichtwellenleiter
- 15: Verbindungskörper
- 16: Durchbruch
- 17: Tangentialführung
- F: Kraftangriff
- E: Empfänger für Lichtstrahlung
- S: Sender für Lichtausstrahlung

## Patentansprüche

1. Vorrichtung zur Untersuchung von Reibverhältnissen an Reibpartnern, mit der eine Normalkraft zwischen zwei zu untersuchende Reibungspartner eingeprägt und mit einem Normalkraftsensor (9) ermittelt wird und bei der die bei einer Relativbewegung zwischen den Reibpartnern wirkende Tangentialkraft mit einem Reibkraftsensor ermittelt wird, **dadurch gekennzeichnet, daß** der Kraftangriffspunkt für die Einleitung der Normalkraft und der Kraftangriffspunkt des Normalkraftsensor (9) über ein elastisches Biegeelement (3) miteinander verbunden sind, mit dem auch der Kraftangriffspunkt für die Einleitung der Tangentialkraft und der Reibkraftsensor verbunden sind, wobei die Verbindungen über Teilbereiche mit unterschiedlicher Biegesteifigkeit erfolgt und die beiden Teilbereiche um 90° versetzt angeordnet sind und bei dem das elastische Biegeelement (3) zwei Biegefedern (10), die über ein Koppelelement (11) zu einem weichen Parallelfederelement verbunden sind sowie eine dazu um 90° versetzt angeordnete steife Biegefeder enthält.

2. Vorrichtung nach Anspruch 1, **dadurch gekennzeichnet, daß** das elastische Biegeelement (3) ein zusätzliches, härteres Parallelfederelement enthält, das zur Einleitung der Tangentialbewegung dient und das zwischen Normalkrafteinleitungspunkt und dem weichen Parallelfederelement angeordnet ist.

3. Vorrichtung nach Anspruch 2, **dadurch gekennzeichnet, daß** in dem elastischen Biegeelement (3) Anschläge (12) zur Begrenzung der Linearbewegung des Parallelfederelement angebracht sind.

4. Vorrichtung nach mindestens einem der vorhergehenden Ansprüche, **dadurch gekennzeichnet, daß** das elastische Biegeelement (3) ein in Ätztechnik hergestelltes Glasteil ist.

5. Vorrichtung nach mindestens einem der vorhergehenden Ansprüche, **dadurch gekennzeichnet, daß** die Einleitung der Normalkraft mit einem Frontalantrieb (5) erfolgt, in dem eine Justiereinrichtung zur parallelen Ausrichtung der beiden Berührungsebenen der Reibungspartner integriert ist.

6. Vorrichtung nach mindestens einem der vorhergehenden Ansprüche, **dadurch gekennzeichnet, daß** der Normalkraftsensor (9) und der Reibkraftsensor jeweils optische Wegsensoren sind, deren ausgegebene Signale in elektrische Signal umgewandelt und einer Signalverarbeitungseinheit (7) zugeführt werden.

7. Vorrichtung nach mindestens einem der vorhergehenden Ansprüche, **dadurch gekennzeichnet, daß** der Reibkraftkraftsensor ein faseroptischer Sensor ist, bei dem mindestens ein Faserteil im elastischem Element (3) angebracht ist.

## Claims

1. Device for the examination of frictional ratios on frictional partners, device by means of which a normal force is impressed between two frictional partners to be examined and determined using a normal force sensor (9), and in which the tangential force acting between the frictional partners during a relative motion is determined using a friction force sensor, **characterized in that** the point of application of force for the application of the normal force and the point of application of force of the normal force sensor (9) are connected with one another via an elastic bending element (3) to which the point of application of force for the application of the tangential force and the friction force sensor are connected as well, with the connections via part areas being with different stiffnesses under flexure and the two part areas being arranged with a 90° offset, and in which the elastic bending element (3) contains two flexion springs (10) which are connected via a coupling element (11) to a soft parallel spring element, and a stiff flexion spring arranged to this with a 90° offset.

2. Device as claimed in claim 1, **characterized in that** the elastic bending element (3) contains an additional harder parallel spring element used to apply the tangential motion and located between the point of application of normal force and the soft parallel spring element.

3. Device as claimed in claim 2, **characterized in that** stops (12) to limit the linear motion of the parallel spring element are fitted in the elastic bending element (3).

4. Device as claimed at least in one of the foregoing claims, **characterized in that** the elastic bending element (3) is a glass part made using etching technology.

5. Device as claimed at least in one of the foregoing claims, **characterized in that** the application of the normal force is done using a front-operated drive mechanism (5) in which an adjusting device for the parallel alignment of the two contact planes of the friction partners is integrated.

6. Device as claimed at least in one of the foregoing claims, **characterized in that** the normal force sensor (9) and the friction force sensor are each optical path sensors, the output signals of which are converted to electrical signals and transferred to a signal processing unit (7).

7. Device as claimed at least in one of the foregoing claims, **characterized in that** the friction force sensor is a fibre-optic sensor, for which at least one fibre part is fitted in the elastic element (3).

## Revendications

1. Dispositif pour la détermination des rapports de friction entre partenaires de frottement, au moyen duquel une force normale est appliquée entre deux partenaires de frottement à analyser et saisie par un senseur de force normale (9), et où la force tangentielle agissant entre les partenaires de frottement lors d'un déplacement relatif est saisie par un senseur d'effort de friction, **caractérisé en ce que** le point d'application de la force normale et le point d'application mécanique du senseur de force normale (9) sont reliés par un élément de flexion élastique (3), par lequel sont également reliés le point d'application de la force tangentielle et le senseur d'effort de friction, les liaisons étant réalisées par des raccords à segments partiels de rigidités flexionnelles différenciées et les deux segments partiels étant décalés entre eux de 90°, et où l'élément de flexion élastique (3) comprend deux ressorts (10) reliés par un élément coupleur (11) à un élément souple à ressort parallèle, ainsi qu'un ressort rigide décalé de 90°.

2. Dispositif selon revendication 1, **caractérisé en ce que** l'élément de flexion élastique (3) comprend un élément à ressort parallèle complémentaire, de dureté supérieure, servant à appliquer le déplacement tangentiel et disposé entre le point d'application de la force normale et l'élément souple à ressort parallèle.

3. Dispositif selon revendication 2, **caractérisé en ce que** des butées (12) de limitation du déplacement linéaire de l'élément à ressort parallèle sont disposées dans l'élément de flexion élastique (3).

4. Dispositif selon l'une des revendications précédentes au moins, **caractérisé en ce que** l'élément de flexion élastique (3) est une pièce en verre produite avec des moyens techniques caustiques.

5. Dispositif selon l'une des revendications précédentes au moins, **caractérisé en ce que** l'application de la force normale au moyen d'un entraînement frontal (5) s'effectue par intégration d'un dispositif de réglage pour l'alignement parallèle des deux plans de contact des partenaires de frottement.

6. Dispositif selon l'une des revendications précédentes au moins, **caractérisé en ce que** le senseur de force normale (9) et le senseur d'effort de friction sont chacun des senseurs optiques de déplacement, dont les signaux émis sont convertis en signaux électriques et conduits vers une unité de traitement de signal (7).

7. Dispositif selon l'une des revendications précédentes au moins, **caractérisé en ce que** le senseur d'effort de friction est un senseur à fibres optiques dont au moins un segment fibreux est disposé dans l'élément élastique (3).
